## Europäisches Patentamt

## European Patent Office

## Office européen des brevets

(19)

(11) Numéro de publication: **0 229 805**
**B1**

(12) **FASCICULE DE BREVET EUROPÉEN**

(45) Date de publication du fascicule du brevet:
10.05.89

(51) Int. Cl.⁴: **B 65 B 5/10,** B 65 G 47/14

(21) Numéro de dépôt: **86904228.3**

(22) Date de dépôt: **24.07.86**

(86) Numéro de dépôt international:
**PCT/FR 86/00262**

(87) Numéro de publication internationale:
**WO 87/00504 (29.01.87 Gazette 87/03)**

(54) **MACHINE POUR LA MISE EN PLACE AUTOMATIQUE DE PRODUITS DANS DES ALVEOLES RECEPTEURS.**

(30) Priorité: **26.07.85 FR 8511579**

(43) Date de publication de la demande:
**29.07.87 Bulletin 87/31**

(45) Mention de la délivrance du brevet:
**10.05.89 Bulletin 89/19**

(84) Etats contractants désignés:
**AT BE CH DE FR GB IT LI NL SE**

(56) Documents cité:
**GB-A-1 079 174**
**US-A-2 945 335**
**US-A-2 955 698**
**US-A-3 016 665**

(73) Titulaire: **ROSSIER, Pierre, Chemin Neuf, Gironville F-91720 Maisse (FR)**

(72) Inventeur: **ROSSIER, Pierre, Chemin Neuf, Gironville F-91720 Maisse (FR)**

(74) Mandataire: **Nithardt, Roland, CABINET NITHARDT & BURKARD 12, rue du 17 Novembre, F-68100 Mulhouse (FR)**

## Description

La présente invention concerne une machine pour la mise en place automatique de produits, en particulier de produits alimentaires, tels que par exemple des biscuits, des petits fours ou similaires, sur au moins une épaisseur dans des alvéoles récepteurs, cette machine comportant au moins un convoyeur sans fin pour transporter les produits disposés en vrac, un dispositif d'alignement de ces produits, un dispositif de transport des alvéoles et un dispositif de dépose des produits dans les alvéoles.

Le problème de la mise en boîte de certains produits alimentaires, notamment des biscuits, des petits fours ou similaires, ayant des formes plutôt irrégulières, n'a pas été résolu de manière satisfaisante à ce jour. L'alignement des biscuits sur une bande transporteuse s'effectue habituellement de façon manuelle et la mise en boîte, si elle n'est pas effectuée manuellement, se fait par l'intermédiaire d'un bras mobile muni de ventouses. Une intervention manuelle constitue un inconvénient majeur parce qu'elle s'effectue sur une ligne où toutes les autres opérations peuvent être automatisées. Le recours à un bras mobile utilisant des ventouses limite considérablement les cadences de production et ne peut pas s'appliquer à la manipulation de certains produits.

La présente invention se propose de pallier ces inconvénients en réalisant une machine entièrement automat; sée pour aligner et mettre en boîte des produits alimentaires et notamment des biscuits pouvant avoir des formes irrégulières quelconques. Dans ce but, la machine pour la mise en place automatique de produits, selon l'invention, est caractérisée en ce que le dispositif d'alignement des produits comporte au moins un organe souple sans fin disposé parallèlement au-dessus du convoyeur sans fin et entraîné en sens inverse, cet organe souple sans fin étant équipé d'au moins une série de taquets, alignés dans la direction de leur déplacement et montés de manière à pointer vers la surface du convoyeur sans fin, les extrémités libres des taquets étant disposées à une distance de la surface du convoyeur sans fin inférieure à l'épaisseur des produits transportés.

Selon un mode de réalisation avantageux, l'organe souple sans fin comprend une bande sans fin hérissée d'au moins une ligne de taquets sensiblement perpendiculaires à son plan.

Selon un mode de réalisation préféré, l'organe souple sans fin comprend au moins deux chaînes sans fin montées parallèlement entre elles et reliées par des barres transversales perpendiculaires à ces chaînes, chacune de ces barres étant équipée d'une série de taquets disposés à intervalles réguliers pour former des lignes de taquets parallèles aux chaînes, chaque taquet étant orienté vers la surface du convoyeur sans fin des produits.

Dans ce mode de réalisation, chaque taquet comporte avantageusement des moyens de réglage agencés pour permettre de régler sa hauteur, son inclinaison par rapport à la surface du convoyeur sans fin des produits et sa distance par rapport aux taquets voisins situés sur la même barre transversale.

Chacune des chaînes sans fin comporte avantageusement des moyens de fixation conçus pour régler l'écartement entre les barres transversales.

Le dispositif de transport des alvéoles récepteurs comporte de préférence au moins une chaîne sans fin portant une série de leviers pivotants dont une extrémité est articulée sur la chaîne et dont l'autre extrémité porte un alvéole récepteur, chacun de ces leviers étant équipé d'un organe suiveur agencé pour suivre un organe de guidage destiné à coopérer avec l'organe suiveur solidaire de chaque levier pour assurer une inclinaison déterminée à ce levier. Cet organe suiveur est de préférence constitué par une glissière à inclinaison variable.

Le dispositif de dépose des produits dans les alvéoles récepteurs comporte de préférence un organe distributeur agencé pour prendre en charge les produits amenés par le convoyeur sans fin, une glissière orientable pour diriger les produits du distributeur vers les alvéoles et des moyens de commande pour commander l'organe distributeur et l'orientation de la glissière.

L'organe distributeur comporte avantageusement au moins une roue à picots constituée par un tambour hérissé de taquets disposés radialement à la surface périphérique du tambour, ces picots étant régulièrement espacés et leur extrémité étant séparée du convoyeur sans fin par une distance libre inférieure à l'épaisseur des produits convoyés.

Les moyens de commande du distributeur comportent avantageusement un disque pourvu, le long de sa périphérie, d'au moins un élément protubérant agencé pour entrer en contact avec un élément complémentaire lié à l'organe distributeur, et conçu pour faire tourner ce dernier d'au moins un arc de cercle correspondant à la distance entre deux picots, cette distance étant sensiblement égale à la longueur d'un produit transporté.

La roue à picots comporte autant d'éléments complémentaires que de picots disposés sur un même cercle tracé sur la surface périphérique du tambour.

Le disque des moyens de commande de l'organe distributeur comporte autant d'éléments protubérants que les alvéoles reçoivent de produits.

Les moyens de dépose comportent avantageusement une came centrale et un levier associé à cette came et à la glissière de transfert des produits, ce levier étant en appui sur la came pour régler l'inclinaison de la glissière par rapport aux alvéoles récepteurs en fonction de la position angulaire de la came.

Les moyens de dépose comportent de préférence un organe amortisseur des produits comportant au moins un ruban souple, libre à l'une de ses extrémités et fixé à son autre extrémité de telle manière qu'il pend librement dans chaque alvéole récepteur lorsque celui-ci se trouve dans sa position de remplissage.

La présente invention sera mieux comprise en référence à la description d'un exemple de réalisation et du dessin annexé dans lequel:

La figure 1 représente une vue schématique partielle de la machine illustrant plus particulièrement le dispositif de dépose et le dispositif de transport des alvéoles,

La figure 2 représente une vue partielle d'une variante du dispositif illustré par la figure 1,

La figure 3 représente une vue schématique en élévation du dispositif d'alignement des produits,

La figure 4 représente une vue de dessus de ce dispositif et,

La figure 5 représente une vue de détail des taquets du dispositif d'alignement.

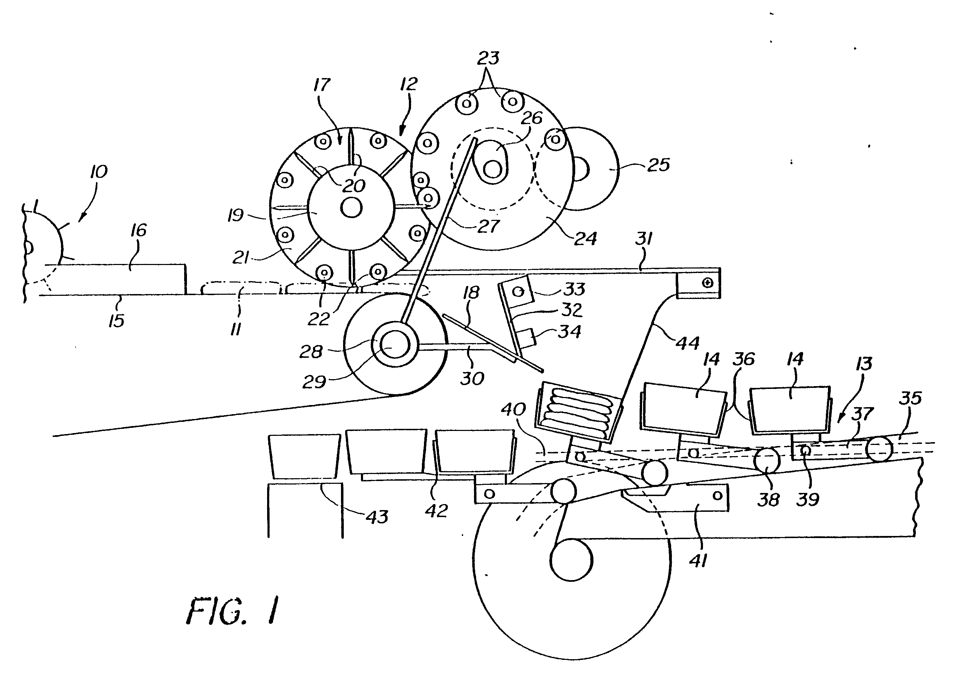

La machine illustrée par la figure 1 comporte principalement un dispositif 10 d'alignement des produits 11 agencé pour ranger les produits en file selon plusieurs colonnes un dispositif de dépose 12 des produits alignés et un dispositif de transport 13 des alvéoles 14 agencés pour contenir lesdits produits 11.

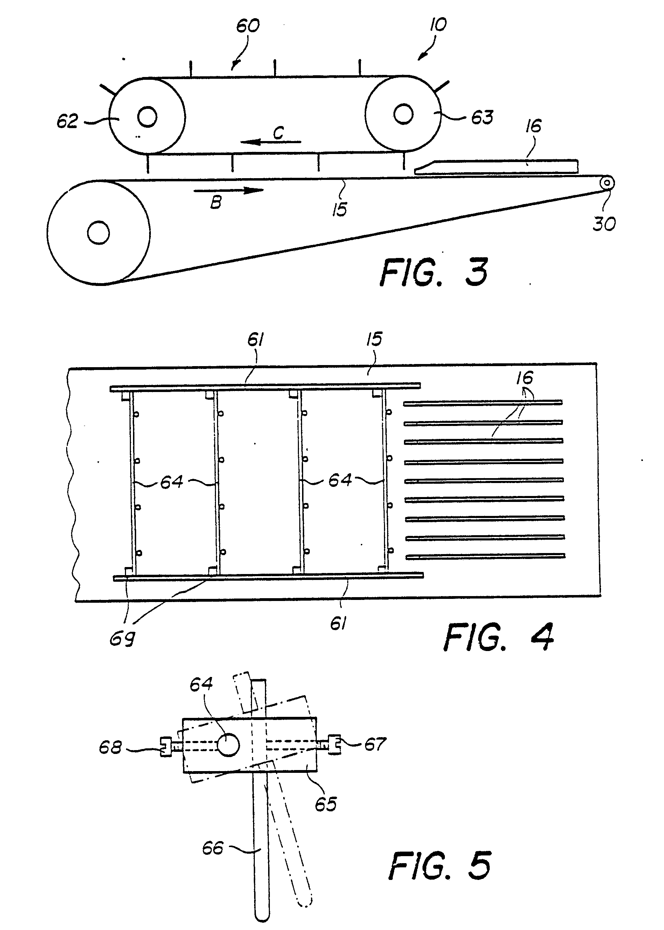

Le dispositif d'alignement 10, qui sera décrit plus en détail en référence aux figures 3 à 5, se compose notamment d'un convoyeur sans fin 15, par exemple du type à bande souple, entraîné en continu, et de plusieurs guides fixes longitudinaux 16 (voir figure 4) conçus pour canaliser les produits 11 et pour les transporter, d'une zone d'approvisionnement où ils sont disposés en vrac, vers une zone de prise en charge par le dispositif de dépose 12, où ils se présentent bout à bout sur plusieurs colonnes parallèles entre elles.

Dans l'exemple décrit, les produits sont entraînés par friction par le convoyeur à bande 15, alignés à l'aide de taquets servant de poussoir, et canalisés par les guides fixes 16 qui les amènent à proximité du dispositif de dépose 12.

Ce dispositif de dépose comporte essentiellement un organe distributeur 17 agencé pour prendre en charge les produits amenés par le convoyeur à bande sans fin 15 et une glissière 18 de transfert des produits agencée pour diriger les produits du distributeur vers les alvéoles récepteurs 14. L'organe distributeur comporte au moins une roue à picots, cette roue étant constituée d'un tambour cylindrique 19 hérissé de picots 20 disposés radialement à la périphérie de ce tambour. Les picots 20 sont régulièrement espacés sur plusieurs lignes circulaires parallèles entre elles et tracées à la périphérie du tambour. Ils sont ainsi regroupés en plusieurs séries dont chacune correspond à un couloir de guidage des produits défini par deux guides fixes longitudinaux 16 du dispositif d'alignement 10 (décrit par la suite).

Les picots 20 sont chargés de pousser les produits 11 jusque sur la glissière 18 d'où ils glissent directement dans les alvéoles récepteurs 14.

Le tambour 19 de l'organe distributeur 17 est associé à un disque 21 qui porte une série d'éléments protubérants, de préférence des galets 22, montés sur une des faces de ce disque, et régulièrement espacés le long de sa périphérie. Le nombre des galets 22 est égal au nombre de picots d'une même série. Ces galets sont destinés à coopérer avec des éléments complémentaires, de préférence des galets d'entraînement 23 montés sur un disque d'entraînement 24, couplé à une roue d'entraînement 25 d'un moteur (non représenté). Les galets 23 sont montés sur une face du disque 24, le long de sa périphérie, et leur nombre est égal au nombre de produits destinés à être placés dans un même alvéole récepteur. En effet, à chaque tour du disque 24 définissant un tour de la machine, correspond un pas du mécanisme d'avance des alvéoles récepteurs. Dans l'exemple illustré, le disque 24 porte cinq galets d'entraînement 23. A chaque tour du disque 24, un galet d'entraînement prend en charge un galet 22 du disque 21, de sorte que pour un tour dudit disque 24, au total cinq produits sont poussés par les picots d'une même série et déposés dans un alvéole récepteur.

Au centre du disque d'entraînement 24 est montée une came 26 sur laquelle prend un appui un levier 27 solidaire d'une douille 28 montée sur un axe fixe 29, et susceptible de pivoter librement autour de cet axe. Cette douille 28 est solidaire d'un second levier 30 qui porte à son extrémité libre la glissière de transport des produits 18. La force de rappel due au poids de la glissière 18 tend à faire pivoter la douille vers la droite sur la figure, ce qui a pour effet de maintenir le levier 27 en appui contre la came 26.

Un peigne 31 comporte un certain nombre de branches qui s'étendent entre les séries parallèles entre elles de picots 20. Il a pour effet d'éliminer les produits qui se présentent dans la zone de dépose et qui ne sont pas alignés à la suite les uns les autres, notamment les produits qui se chevauchent. Le peigne est de préférence pivotant pour faciliter l'accès aux composants montés en dessous.

Un volet 32, articulé sur un axe fixe 33 et équipé d'une masselotte réglable 34, assure le freinage des produits sur la rampe constituée par la glissière 18 de transfert des produits. Il peut être monté sous le peigne 31.

Le dispositif de dépose, décrit ci-dessus, est de conception très simple et de construction particulièrement économique. Le mécanisme de commande de l'organe distributeur peut aisément être transformé en fonction des besoins. L'adjonction ou le retrait d'un ou de plusieurs galets 23 permet d'augmenter ou de réduire d'une ou de plusieurs unités le nombre de produits déposés dans chaque alvéole récepteur. La forme de la came permet d'orienter de façon appropriée la glissière de transfert des produits et de varier cette orientation au cours du remplissage des alvéoles, de telle manière que ce remplissage se fasse de la façon la plus appropriée. Si nécessaire, la force de freinage des produits peut être dosée selon la masse du contrepoids 34 fixé au volet 32.

Le dispositif de transport des alvéoles 14 comprend essentiellement une chaîne 35 sans fin entraînée en rotation continue ou discontinue selon une trajectoire déterminée par un chemin de roulement le long duquel se déplace cette chaîne. Sur cette chaîne sont montés des supports 36 portant les alvéoles 14. Ces supports sont fixés aux extrémités libres de leviers 37 articulés, à leur autre extrémité, sur les axes 38 qui constituent les axes des maillons de la chaîne 35. A leur autre extrémité libre, les leviers portent un organe suiveur 39 qui est conçu pour prendre appui sur un organe de guidage 40. Cet organe de guidage définit la trajectoire suivie par les extrémités libres des leviers 37, alors que la trajectoire des autres extrémités de ces leviers correspondant aux axes 38 des maillons, est définie par le chemin de roulement de la chaîne. Par une disposition relative appropriée de ces deux éléments de guidage, il est possible de régler l'inclinaison des alvéoles récepteurs pour que la réception des produits soit assurée de la façon la plus appropriée. Par l'interposition d'un creux ou d'un bossage, à un emplacement déterminé du chemin de roulement de la chaîne, il est possible de modifier localement l'inclinaison des alvéoles afin d'assurer la meilleure mise en place des produits. Un tel creux ou bossage peut, par exemple, être réalisé au moyen d'un levier réglable 41. Après leur remplissage, les alvéoles récepteurs 14 sont déposés sur un plateau récepteur 42 d'où ils sont évacués par une bande transporteuse d'évacuation 43.

Pour amortir la chute des produits dans les alvéoles et pour les guider au cours de cette chute, une bande souple 44 en tissu, en fibre de verre ou en une fibre synthétique ou naturelle quelconque, est suspendue sous le peigne 31 et pend vers le bas de telle manière que son extrémité libre soit localisée au fond et le long de la paroi arrière de l'alvéole qui reçoit les produits.

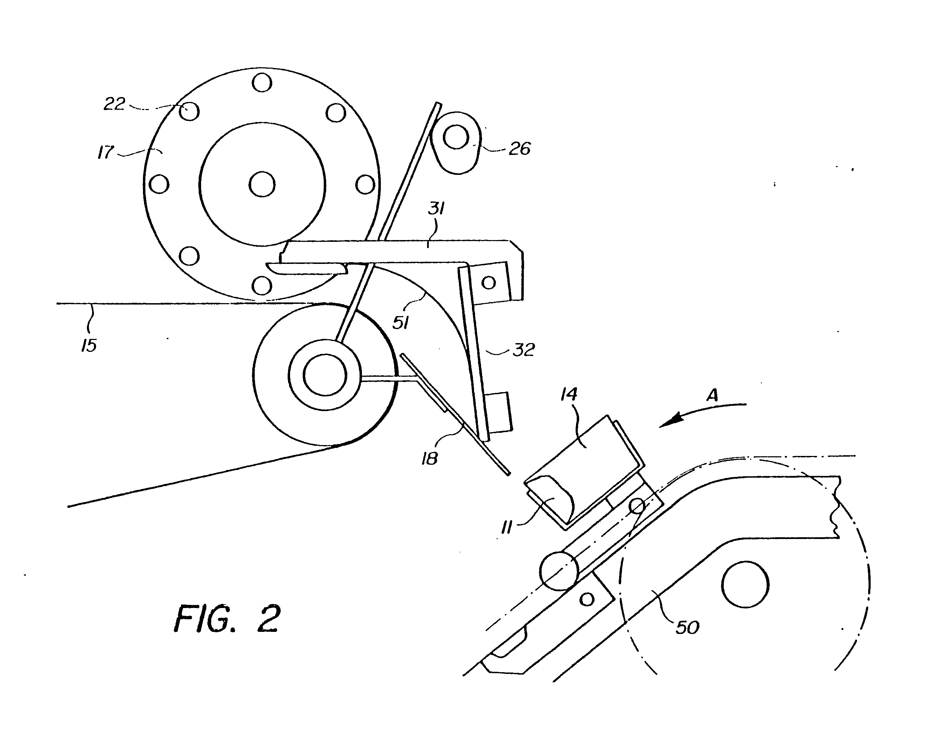

La variante illustrée par la figure 2 montre un dispositif de dépose sensiblement identique à celui de la figure 1 associé à un dispositif de transport des alvéoles récepteurs agencé pour permettre la mise en place verticale juxtaposée des produits 11 dans les alvéoles récepteurs 14. Comme cela a été mentionné précédemment, le principe de l'association du chemin de roulement de la chaîne de transport des alvéoles récepteurs et d'un organe de guidage de cette chaîne permet une grande souplesse de réalisation de ces moyens de transport des alvéoles. Comme le montre la figure, les alvéoles 14 transportés dans le sens de la flèche A sont déplacés le long d'une rampe 50, et se présentent sous la glissière de transfert 18 des produits avec une inclinaison qui permet la mise en place des produits 11 juxtaposés et debout sur leur tranche.

Pour guider les produits pendant leur transfert sur la glissière 18, le dispositif de dépose comporte un déflecteur 51, monté par exemple entre le peigne 31 et le volet 32.

Les autres composants de ce dispositif sont identiques à ceux représentés par la figure 1 et ne seront pas décrits plus en détail dans ce texte.

En référence aux figures 3 à 5, le dispositif d'alignement 10 se compose essentiellement d'une chaîne à taquets 60 qui comprend en fait deux chaînes latérales 61 tendues parallèlement entre elles sur deux paires de pignons 62 et 63. Des barres transversales 64 sont montées sur ces chaînes, perpendiculairement au sens de déplacement des produits, ce sens étant défini par la flèche B indiquant la direction de déplacement du convoyeur à bande 15. Ce sens est opposé au sens du déplacement de la chaîne à taquets 60, matérialisé par la flèche C.

Les barres transversales 64 portent une série de taquets comportant des supports réglables 65 portant chacun un tronçon de tige ronde ou profilée 66. Les tronçons de tige 66 peuvent être réglés en hauteur et bloqués en position à l'aide d'une vis de blocage 67. Les supports réglables 65 peuvent être positionnés le long des barres transversales 64 et fixés dans la position choisie à l'aide d'une seconde vis de blocage 68. Ce moyen permet notamment de choisir le nombre de taquets par barre transversale, de déterminer l'écartement entre les taquets selon la nature et les dimensions des produits à aligner et également de régler l'inclinaison de ces taquets comme représenté sur la figure en traits interrompus. En outre, les barres transversales sont fixées aux chaînes 61 par des moyens de fixation 69 conçus pour régler l'écartement des barres 64 les unes par rapport aux autres.

Les produits sont entraînés par friction par le convoyeur à bande 15.

La chaîne à taquets 60 agit comme un peigne traversant la masse de produits déposés en vrac et coiffe ces produits de manière à les aligner pour former des colonnes qui seront par la suite canalisées entre les guides 16.

La présente invention n'est pas limitée aux formes de réalisation décrites mais peut subir différentes modifications et se présenter sous diverses variantes évidentes pour l'homme de l'art. Dans l'exemple décrit, le dispositif de transport des alvéoles circule selon une direction sensiblement parallèle à la direction de déplacement des produits sur le convoyeur à bande. Toutefois, pour conditionner certains produits il peut être souhaitable de déplacer la chaîne de transport des alvéoles récepteurs dans une direction perpendiculaire à la direction de déplacement des produits. Par ailleurs, le dispositif de transport des alvéoles comportant une chaîne 35 et un organe de guidage 40 de forme allongée, peut être remplacé par un dispositif de transport où les axes d'articulation 38 des leviers sont montés sur un disque et où l'organe de guidage a une forme plus ou moins circulaire.

## Revendications

1. Machine pour la mise en place automatique de produits, en particulier de produits alimentaires, tels que par exemple des biscuits, des petits fours ou similaires, sur au moins une épaisseur dans des alvéoles récepteurs, cette machine comportant au moins un convoyeur sans fin (15) pour transporter les produits (11) disposés en vrac, un dispositif d'alignement de ces produits, un dispositif de transport (13) des alvéoles (14) et un dispositif de dépose (12) des produits dans les alvéoles, caractérisée en ce que le dispositif d'alignement (10) des produits (11) comporte au moins un organe souple sans fin (60) disposé parallèlement au-dessus du convoyeur sans fin (15) et entraîné en sens inverse, cet organe souple sans fin étant équipé d'au moins une série de taquets (66) alignés dans la direction de leur déplacement et montés de manière à pointer vers la surface du convoyeur sans fin, les extrémités libres des taquets étant disposées à une distance de la surface du convoyeur sans fin inférieure à l'épaisseur des produits transportés.

2. Machine selon la revendication 1, caractérisée en ce que l'organe souple sans fin comprend une bande sans fin hérissée d'au moins une ligne de taquets sensiblement perpendiculaires à son plan.

3. Machine selon la revendication 1, caractérisée en ce que l'organe souple sans fin comprend au moins deux chaînes sans fin (61) montées parallèlement entre elles et reliées par des barres transversales (64) perpendiculaires à ces chaînes, chacune de ces barres étant équipée d'une série de taquets (66) disposés à intervalles réguliers pour former des lignes de taquets parallèles aux chaînes, chaque taquet étant dirigé vers la surface du convoyeur sans fin (15) des produits.

4. Machine selon la revendication 3, caractérisée en ce que chaque taquet (66) comporte des moyens de réglage (67, 68), agencés pour permettre de régler sa hauteur, son inclinaison par rapport à la surface du convoyeur sans fin (15) et sa distance par rapport aux taquets voisins de la même barre transversale (64).

5. Machine selon la revendication 3, caractérisée en ce que chaque chaîne (61) comporte des moyens de fixation (69) conçus pour régler l'écartement entre les barres transversales (64).

6. Machine selon la revendication 1, caractérisée en ce que le dispositif de transport 13 des alvéoles (14) comporte au moins une chaîne sans fin portant une série de leviers pivotants (37) dont une extrémité est articulée sur la chaîne et dont l'autre extrémité porte au moins un alvéole récepteur et en ce que chaque levier est équipé d'au moins un organe suiveur (39) agencé pour suivre un organe de guidage (40) destiné à coopérer avec l'organe suiveur solidaire de chaque levier pour assurer une inclinaison déterminée à ce levier.

7. Machine selon la revendication 6, caractérisée en ce que l'organe de guidage (40) est constitué par une glissière à inclinaison variable.

8. Machine selon la revendication 1, caractérisée en ce que le dispositif de dépose (12) des produits dans les alvéoles récepteurs (14) comporte un organe distributeur (17) agencé pour prendre en charge les produits (11) amenés par le convoyeur sans fin (15), une glissière de transfert (18) orientable, destinée à diriger les produits de l'organe distributeur vers les alvéoles et des moyens de commande pour commander l'organe distributeur et l'orientation de la glissière.

9. Machine selon la revendication 8, caractérisée en ce que l'organe distributeur (17) comporte au moins une roue à picots constituée par un tambour (19) hérissé de picots (20) disposés radialement à la surface périphérique du tambour, ces picots étant régulièrement espacés et leur extrémité libre étant séparée du convoyeur sans fin (15) par une distance inférieure à l'épaisseur des produits convoyés.

10. Machine selon la revendication 8, caractérisée en ce que les moyens de commande de l'organe distributeur (17) comportent un disque (24) pourvu le long de sa périphérie d'au moins un élément protubérant (23) agencé pour entrer en contact avec un élément complémentaire (22) lié à l'organe distributeur, et conçu pour faire tourner ce dernier d'au moins un arc de cercle correspondant à la distance entre deux picots (20), cette distance étant sensiblement égale à la longueur d'un produit transporté.

11. Machine selon revendication 10, caractérisée en ce que la roue à picots comporte autant d'éléments complémentaires (22) que de picots disposés sur un même cercle tracé à la surface périphérique du tambour.

12. Machine selon revendication 10, caractérisée en ce que le disque (24) des moyens de commande de l'organe distributeur comporte autant d'éléments protubérants que les alvéoles doivent contenir de produits.

13. Machine selon revendication 1, caractérisée en ce que le dispositif de dépose (12) comporte une came centrale (26) et un levier (27) associé à cette came et à la glissière (18) de transfert des produits, ce levier étant en appui sur la came pour régler l'inclinaison de la glissière par rapport aux alvéoles récepteurs en fonction de la position angulaire de la came.

14. Machine selon revendication 1, caractérisée en ce que les moyens de dépose (12) comportent un organe amortisseur (43) des produits, comportant au moins un ruban souple libre à une de ses extrémités et fixé à son autre extrémité, de telle manière qu'il pende librement dans chaque alvéole récepteur lorsque celui-ci se trouve dans sa position de remplissage.

## Patentansprüche

1. Maschine zum automatischen Einlegen von Erzeugnissen, insbesondere von Nahrungsmitteln, wie z. B. Kekse, Teegebäck o.ä., in mindestens einer Lage in Aufnahmezellen, wobei diese Maschine mindestens folgendes aufweist: ein endloses Förderband (15), um die in loser Schüttung vorliegenden Produkte (11) zu transportieren, eine Vorrichtung zum Ausrichten dieser Produkte, eine Vorrichtung zum Transport (13) der Zellen (14) und eine Vorrichtung zum Ablegen (12) der Produkte in die Zellen, dadurch gekennzeichnet, daß die Ausrichtvorrichtung (10) für die Produkte (11) mindestens ein flexibles endloses Organ (60) aufweist, das parallel über dem Förderband (15) angeordnet ist, und im Gegensinne läuft, wobei dieses flexible endlose Organ mit mindestens einer Seite von in Richtung ihrer Bewegung hintereinander angeordneten Stiften (66) ausgerüstet ist, die so montiert sind, daß sie zur Oberfläche des Förderbandes hin zeigen und ihre freien Enden sich in einer Entfernung von Förderband befinden, die geringer ist, als die Dicke der transportierten Erzeugnisse.

2. Maschine nach Anspruch 1, dadurch gekennzeichnet, daß das flexible endlose Organ ein endloses Band aufweist, das mit mindestens einer Reihe von ungefähr senkrecht zu seiner Fläche stehenden Stiften bestückt ist.

3. Maschine nach Anspruch 1, dadurch gekennzeichnet, daß das flexible endlose Organ mindestens zwei endlose Ketten (61) aufweist, die parallel zueinander montiert und durch senkrecht zu diesen Ketten stehende Querstäbe (64) verbunden sind, wobei jeder dieser Stäbe mit einer Serie von in gleichmäßigen Abständen angeordneten Stiften (66) ausgerüstet ist, welche parallel zu den Ketten liegende Reihen von Stiften bilden und jeder Stift gegen die Fläche des Förderbandes (15) für die Erzeugnisse gerichtet ist.

4. Maschine nach Anspruch 1, dadurch gekennzeichnet, daß jeder Stift (66) Einstellmöglichkeiten (67, 68) aufweist, die dazu dienen, seine Höhe, seine Neigung in Bezug auf die Fläche des Förderbandes (15) und seinen Abstand in Bezug auf die benachbarten Stifte desselben Querstabes (64) einzustellen.

5. Maschine nach Anspruch 3, dadurch gekennzeichnet, daß jede Kette (61) Befestigungsmöglichkeiten aufweist, die dazu dienen, den Abstand zwischen den Querstäben (64) einzustellen.

6. Maschine nach Anspruch 1, dadurch gekennzeichnet, daß die Transportvorrichtung (13) für die Zellen (14) mindestens eine endlose Kette aufweist, die eine Reihe von schwenkbaren Hebeln (37) trägt, deren eines Ende an die Kette angelenkt ist und dessen anderes Ende mindestens eine Aufnahmezelle trägt, und daß jeder Hebel mit mindestens einem Nachführungsorgan (39) versehen ist, das dazu dient, einem Führungsorgan (40) zu folgen, um eine bestimmte Neigung dieses Hebels zu gewährleisten.

7. Maschine nach Anspruch 6, dadurch gekennzeichnet, daß das Führungsorgan (40) aus einer Gleitschiene mit veränderlicher Neigung besteht.

8. Maschine nach Anspruch 1, dadurch gekennzeichnet, daß die Vorrichtung (12) zum Ablegen der Erzeugnisse in den Aufnahmezelllen (14) ein Verteilelement (17) aufweist, welches dazu dient, die vom Förderband (15) herangebrachten Erzeugnisse (11) aufzunehmen, des weiteren eine schwenkbare Übergaberutsche (18), welche vorgesehen ist, um die Erzeugnisse von der Verteileinrichtung zu den Zellen zu bringen und Steuereinrichtungen, um die Verteileinrichtung und die Schwenkung der Rutsche zu steuern.

9. Maschine nach Anspruch 8, dadurch gekennzeichnet, daß die Verteileinrichtung (17) mindestens eine Zahntrommel aufweist, die aus einer Trommel (19) besteht, welche mit radial auf der Umfangsfläche der Trommel angeordneten Zähnen (20) bestückt ist, wobei diese Zähne in gleichmäßigen Abständen angeordnet sind und ihr freies Ende vom Förderband (15) durch einen Abstand getrennt ist, der geringer ist als die Dicke der transportierten Erzeugnisse.

10. Maschine nach Anspruch 8, dadurch gekennzeichnet, daß die Einrichtung zur Steuerung der Verteileinrichtung (17) eine Scheibe (24) aufweist, die entlang ihrer Peripherie mit mindestens einem vorspringenden Element (23) versehen ist, welches dazu dient, ein zugehöriges, mit der Verteileinrichtung verbundenes Element (22) zu erfassen und diese Einrichtung um mindestens einen, dem Abstand zwischen zwei Zähnen (20) entsprechenden Kreisbogen zu drehen, wobei dieser Abstand ungefähr gleich der Länge eines transportierten Erzeugnisses ist.

11. Maschine nach Anspruch 10, dadurch gekennzeichnet, daß die Zahntrommel ebenso viele zugehörige Elemente (22) aufweist, wie Zähne in einem kreisförmigen Satz auf der Außenfläche der Trommel angeordnet sind.

12. Maschine nach Anspruch 10, dadurch gekennzeichnet, daß die Scheibe (24) der Steuerung für die Verteileinrichtung ebenso viele vorspringende Elemente aufweist, wie die Zellen Erzeugnisse enthalten sollen.

13. Maschine nach Anspruch 1, dadurch gekennzeichnet, daß

die Ablegeeinrichtung (12) einen zentrale Nocken (26) aufweist, und einen diesem Nocken und der Übergaberutsche (18) für die Erzeugnisse zugeordneten Hebel, wobei dieser Hebel an dem Nocken anliegt, um die Neigung der Rutsche bezüglich der Aufnahmezellen in Abhängigkeit der Winkelstellung des Nockens zu regulieren.

14. Maschine nach Anspruch 1,
dadurch gekennzeichnet, daß
die Ablegeeinrichtung (12) ein Dämpfungsorgan (43) für die Erzeugnisse aufweist, bestehend aus mindestens einem flexiblen Band, das an einem seiner Enden frei und an seinem anderen Ende befestigt ist, derart, daß es frei in jede Aufnahmezelle hängt, wenn diese sich in ihrer Füllungsstellung befindet.

## Claims

1. Machine for automatically positioning products, in particular food products, such as for example, biscuits, petits fours or the like, in at least one layer in receptor cavities, this machine comprising at least one endless conveyor belt (15) to transport the randomly positioned products (11), an alignment device of these products, a transporting device (13) of the cavities (14) and a deposit devices of the products in the cavities, characterized in that the alignment device (10) of the products (11) comprises at least one flexible endless element (60), positioned parallel above the endless conveyor belt (15) and driven in the reverse direction, this flexible endless element being equipped with at least one series of pins (66) aligned in the direction of their displacement and mounted in a manner so as to point towards the surface of the endless conveyor belt, the free ends of the pins being positioned at a distance from the surface of the endless conveyor belt which is less than the thickness of the transported products.

2. Machine according to claim 1, characterized in that the flexible endless element comprises an endless belt provided with at least one line of pins substantially perpendicular to its plane.

3. Machine according to claim 1, characterized in that the flexible endless element comprises at least two endless chains (61) mounted parallel to one another and connected by transverse bars (64) perpendicular to the chains, each of these bars being equipped with a series of pins (66) positioned at regular intervals to form pin lines parallel to the chains, each pin being directed towards the surface of the endless conveyor belt (15) of the products.

4. Machine according to claim 3, characterized in that each pin (66) comprises adjustment means (67, 68), adapted to allow for the adjustment of its height, its inclination with respect to the surface of the conveyor belt (15) and its distance with respect to the adjacent pins of the same transverse bar (64).

5. Machine according to claim 3, characterized in that each chain (61) comprises attachment means (69) adapted to adjust the spacing between the transverse bars (64).

6. Machine according to claim 1, characterized in that the transport device (13) of the cavities (14) comprises at least one endless chain carrying a series of pivotable levers (37) of which one end is linked to the chain and whose other end carries at least one receptor cavity, and in that each lever is equipped with at least one follower element (39) adapted to follow a guiding element (40), adapted to cooperate with the follower element integral with each lever to assure a predetermined inclination of this lever.

7. Machine according to claim 6, characterized in that the guiding element (40) is constitued by a slide having variable inclination.

8. Machine according to claim 1, characterized in that the deposit device (12) of the products in the receptor cavities (14) comprises a distributor element (17) adapted to take up the products (11) brought by the endless conveyor belt (15), a swivelling transfer slide (18), adapted to direct the products of the distributor element towards the cavities, and control means to control the distributor element and the orientation of the slide.

9. Machine according to claim 8, characterized in that the distributor element (17) comprises at least one pin wheel constituted by a drum (19) provided with pins (20) positioned radially to the peripheral surface of the drum, these pins being regularly spaced and their free end being separated from the conveyor belt (15) by a distance less than the thickness of the conveyed products.

10. Machine according to claim 8, characterized in that the control means of the distributor element (17) comprise a disk (24) provided along the length of its periphery with at least one protruding element (23) adapted to enter into contact with a complimentary element (22) connected to the distributor element, and adapted to make the latter turn through at least an arc corresponding to the distance between two pins (20), this distance being substantially equal to the lenght of a transported product.

11. Machine according to claim 10, characterized in that the pin wheel comprises as many complimentary elements (22) as pins positioned on a circle described on the peripheral surface of the drum.

12. Machine according to claim 10, characterized in that the disk (24) of the control means of the distributor element comprises as many protruding elements as the cavities must contain products.

13. Machine according to claim 1, characterized in that the deposit device (12) comprises a central cam (26) and a lever (27) associated with this cam and with the slide (18) for transfer of products, this lever being supported on the cam to adjust the inclination of the slide with respect to the receptor cavities as a function of the angular position of the cam.

14. Machine according to claim 1, characterized in that the deposit means (12) comprise a cushioning element (43) of the products, comprising at least one flexible ribbon free at one of its ends and attached at its other end, such that it hangs freely in each receptor cavities when the latter is positioned in its filling position.

FIG. 1

FIG. 2

EP 0 229 805 B1

FIG. 3

FIG. 4

FIG. 5